# EUROPÄISCHE PATENTANMELDUNG

(11) **EP 4 353 698 A1**
(43) Veröffentlichungstag der Anmeldung: **17.04.2024**
(21) Anmeldenummer: 23203686.3
(22) Anmeldetag: 16.10.2023
(51) Int. Cl.: C04B 26/06, B05D 3/06, B05D 3/12, B05D 5/02, B05D 7/00, B05D 1/02, B05D 1/28, C04B 111/00, C04B 111/54

(54) **VERFAHREN ZUR HERSTELLUNG EINER TIEFMATTEN WERKSTOFFPLATTE MIT BETON- UND STEINSTRUKTUR**

(30) Priorität: 14.10.2022 DE 102022126978
(71) Anmelder: Neisemeier Invest GmbH, 45891 Gelsenkirchen (DE)
(72) Erfinder: Schubert, Peter, 48493 Wettringen (DE)
(74) Vertreter: Weeg, Thomas

(57) **Zusammenfassung**

Die vorliegende Erfindung betrifft ein Verfahren zur Herstellung von plattenförmigen Werkstückplatten mit dekorativen Oberflächen mit den Schritten
(A) Bereitstellen einer Trägerplatte,
(B) Beschichtung der Trägerplatte mit einer Beschichtungsmasse,
(C) Strukturierung der Beschichtungsmasse,
(D) physikalische Trocknung der Beschichtungsmasse zum ausgehärteten Mineralbelag,
(E) Lackierung des Mineralbelages mit einem strahlenhärtenden UV-Lack, und
(F) Bestrahlung der Lackmasse mit einer Strahlung im vakuumultravioletten (VUV) Spektralbereich derartig, dass sich eine Mikrofaltung mit einer Strukturtiefe von weniger als 5 µm ausbildet
sowie eine plattenförmige Werkstückplatte.

## Beschreibung

Die vorliegende Erfindung betrifft ein Verfahren zur Herstellung von plattenförmigen Werkstückplatten mit dekorativen Oberflächen sowie eine plattenförmige Werkstückplatte.

Die plattenförmigen Werkstücke können in der weiteren Verarbeitung z.B. als Möbelfronten, Fensterbank-, Fußboden-, Wand-, Fassaden- oder Deckenpaneele verwendet werden. Es besteht bei derartigen Werkstücken der Wunsch, eine natürliche Erscheinung und Lebendigkeit von Kunst- und Naturstein, insbesondere die des Werkstoffes Beton, zu imitieren. Im Stand der Technik sind diverse Verfahren bekannt, mit denen sich derartige Nachbildung erzeugen lassen.

In der industriellen Herstellung von flächigen Werkstücken werden, insbesondere für den Möbel- und Fußbodenbereich, Holzfaserplatten wie Span-, MDF- und HDF-Platten als Kernlage verwendet. Zum Beschichten der Kernlage werden ein- oder mehrschichtigen Kunststoffbahnen, die unter Verwendung von Melaminharz hergestellt wurden, überwiegend eingesetzt.

Eine bekannte Möglichkeit zur Erzeugung von flächigen Werkstücken mit Stein- oder Betonnachbildung stellt die Verwendung von Dekorfolien da. Die Dekorfolien sind ein mit Titandioxid gefülltes Papier, welches üblicherweise im rotativen Tiefdruckverfahren, Flexo-Druck, Offset-Druck, Siebdruckverfahren, Inkjet-Verfahren oder Laserdruck-Verfahren mit einem Dekor bedruckt werden kann. Man spricht in diesem Fall von einer Dekornachbildung. Nach dem Druck folgt eine Imprägnierung der Dekorpapiere mit Melaminformaldehydharzen oder anderen duroplastischen Harzsystemen. Durch die Imprägnierung wird die Spaltfestigkeit des Dekorpapieres und die Verbundeigenschaften zur Kernlage gewährleistet. Die so behandelten Dekorfilme werden sehr häufig im Kurztaktpressverfahren bei üblicherweise einem spezifischen Flächendruck von 30 bis 45 bar, einer Heißplattentemperatur von 155 bis 210 °C innerhalb von 18-30 Sekunden unter Verwendung eines strukturierten Pressbleches verpresst. Diese Folienbeschichtung vermittelt eine dekorative und funktionelle Oberfläche mit gewünschten Oberflächeneigenschaften wie Hygiene, Abriebfestigkeit, Kratzbeständigkeit oder Chemikalienwiderstandsfähigkeit.

Es ist möglich, durch den Einsatz von Pressblechen eine Steinstruktur zu prägen und damit die imprägnierten Dekorfilme zu strukturieren. Das Pressblech gibt die Struktur als negativ ausgearbeitetes Relief vor. Eine individuelle Gestaltungsmöglichkeit der strukturierten Oberflächen besteht somit jedoch nicht.

Nachteilig ist auch, dass ein matter Glanzgrad von Beton- und Steinoberfläche nicht imitiert werden kann. Zudem sind solche melaminharzbeschichteten Platten haptisch meist kalt und fühlen sich plastikartig an. Die haptische Wahrnehmung von melaminbeschichteten Oberflächen entspricht somit nicht dem Wunsch der meisten Endkonsumenten.

Es ist möglich, eine melaminharzbasierte Oberfläche mit einem geeigneten UV-härtenden Acrylatlack zu veredeln. UV-Lackschichten weisen im Allgemeinen hohe Beständigkeiten und Widerstandsfähigkeiten gegenüber physikalischen, chemischen und mechanischen Einflüssen auf. Insbesondere durch den Einsatz von kurzwelligem UV-Licht von Wellenlängen unter 220 nm lassen sich mattierte Oberflächen mit Antifingerprint-Effekt und einer angenehmen Haptik herstellen, welche sich immer größerer Beliebtheit erfreuen.

Beispielhaft ist aus der EP 3 326 834 A1 ein Verfahren zur Herstellung eines Fußbodenpanels bekannt, welches eine Faserplatte als Trägerplatte aufweist, die auf ihrer Oberseite mit einer Oberflächenstrukturierung und einer Versiegelung versehen ist, wobei die Versiegelung eine in mehreren Lagen aufgebrachte hochabriebfeste sowie kratzfeste Lackschicht umfasst, wobei die Lagen der Lackschicht jeweils auf Basis von UV-Licht getrocknet werden. Man spricht in diesem Fall von einer Dekornachbildung.

Aus EP 0 706 834 B1 ist ein Verfahren zur Herstellung von UV-härtbaren, flächenförmigen Trägermaterialien mit matter Oberfläche bekannt, wobei die Oberfläche eine Dekor-Steinnachbildung enthalten kann und die Tiefenstrukturierung über strukturierte Walzen erfolgt, wobei die Mikrofaltung der Decklackschicht durch kurzwelliges UV-Licht ausgebildet wird. Man spricht in diesem Fall ebenfalls von einer Dekornachbildung.

Ferner sind aus DE 198 42 510 A1, DE 10 2008 061 244 A1, EP 2 794 126 B1, EP 0 706 834 B1, EP 3 725 519 A2 und EP 0 706 834 A1 Verfahrensschritte mit sehr kurzwelligem UV-Licht zur Ausbildung einer Mikrofaltung bei flächenförmigen Werkstoffen bekannt.

Um die oben beschriebenen Nachteile solcher melaminbasierten Dekoroberflächen wenigstens teilweise zu überwinden, wurden verschiedene Verfahren vorgeschlagen. Eine Möglichkeit ist die Beschichtung von plattenförmigen Kernlagen mit plastischem Beton als Deckschicht. Die Betonbeschichtung beruht auf einer physikalischtrocknenden Beschichtungsmasse, welche üblicherweise mit 1 bis 3 mm auf die Kernlage aufgetragen wird. Optisch und haptisch lassen sich mit diesem Verfahren die typischen Merkmale für Betonoberflächen wie Ankerlöcher, Lunker und feine Risse abbilden. Diese Oberflächen wirken in Optik und Haptik authentisch und gleichen die haptischen Nachteile von melaminbeschichte Oberflächen aus. Nachteilig dabei ist, dass der Einsatz von Zementbeton durch seine hohe Sprödigkeit und fehlende Duktilität limitiert bleibt. Die poröse Struktur ist durchlässig für wasserbasierte Medien, sodass die Flecken- und Chemikalienbeständigkeit eine weite Verwendung einschränkt. Zudem sind diese Materialien nicht mit herkömmlichen Hartmetallwerkzeugen bearbeitbar.

Zur Kompensierung der beschriebenen Nachteile zementbetonbeschichteter Oberflächen wurde in den letzten Jahren vermehrt Polymerbeton eingesetzt.

Polymerbeton besteht im Wesentlichen aus mineralischen Zuschlagstoffen wie Quarzkies, Quarzsand und Gesteinsmehl, eingebunden in Reaktionsharze, meist Epoxidharz (EP) oder ungesättigtes Polyesterharz (UP). Die Reaktionsmasse härtet meist innerhalb von 4 Stunden bei Umgebungstemperatur aus. Damit lassen sich plattenförmige Werkstücke herstellen, welche gegenüber den meisten chemischen Flüssigkeiten resistent und witterungsbeständig sind. Polymerbeton hat sich daher für den Außenbereich etabliert. Die glatte und porenfreie Oberfläche gewährleistet hohe Beständigkeiten, doch sind diese Werkstückoberflächen optisch und haptisch nicht mit einer markanten Betonoberfläche vergleichbar.

Beispielhaft ist aus der DE 101 40 238 A1 ein Verfahren zur Herstellung von Platten mit Mineralstoffbelag durch die Verwendung von Spachtelmasse bekannt, wobei die Oberflächenstrukturierung durch den Einsatz einer luftundurchlässigen Folie ausgebildet wird und nach der Trocknung eine Lackierung erfolgen kann. Es ist offenbart, dass die Spachtelmasse mineralische Zuschlagstoffe aufweisen und auf einen Träger aufgewalzt werden kann.

Vor dem Hintergrund der Nachteile des oben beschriebenen Standes der Technik befasst sich die vorliegende Erfindung mit der Aufgabe, ein Verfahren zur Beschichtung einer Trägerplatte zur Erzeugung einer tiefmatten Werkstoffplatte mit Beton- und Steinstruktur-Optik bei gleichzeitig samtig weicher Haptik herzustellen, ohne dabei die mechanische Beständigkeit sowie eine ausgeprägte Widerstandsfähigkeit gegenüber Chemikalien oder Haushaltsagenzien im Vergleich zu herkömmlichen Werkstoffplatten zu verschlechtern.

Die Aufgabe wird gelöst durch ein Verfahren zum Herstellen einer plattenförmigen Werkstückplatte mit den Schritten
(A) Bereitstellen einer Trägerplatte,
(B) Beschichtung der Trägerplatte mit einer Beschichtungsmasse,
(C) Strukturierung der Beschichtungsmasse,
(D) physikalische Trocknung der Beschichtungsmasse zu einem ausgehärteten Mineralbelag,
(E) Lackierung des Mineralbelages mit einem strahlenhärtenden UV-Lack, und
(F) Bestrahlung der Lackmasse mit einer Strahlung im vakuumultravioletten (VUV) Spektralbereich derartig, dass sich eine Mikrofaltung mit einer Strukturtiefe von weniger als 5 µm ausbildet.

Die Erfindung wird auch gelöst durch eine plattenförmige Werkstückplatte, die unter Anwendung des erfindungsgemäßen Verfahrens hergestellt worden ist.

Mit diesen Verfahrensschritten kann eine plattenförmige Werkstückplatte mit einer authentisch anmutenden Beton- oder Steinstruktur bei gleichzeitigem tiefen Glanzgrad erzeugt werden. Insbesondere lassen sich mit diesem Verfahren ebenfalls optisch und haptisch die typischen Merkmale für Betonoberflächen wie Ankerlöcher, Lunker und feine Risse abbilden. Auch die dekorativen und funktionellen Anforderungen an die Oberfläche mit gewünschten Oberflächeneigenschaften wie Hygiene, Abriebfestigkeit, Kratzbeständigkeit oder Chemikalienwiderstandsfähigkeit werden erfüllt.

Die Trägerplatte kann eine Spanplatte, Faserplatte, beispielsweise als MDF- oder HDF-Platte, Kunststoffplatte, Kunststoffplatte-Holzplatte, auch WPC-Platte genannt, eine Platte mit Schichtstofflagen, eine Blechplatte aus einem metallischen Material, einem Verbundmaterial, eine mehrlagige Sandwich-Platte oder eine sonstige beliebige Platte sein.

Die Beschichtung kann auf verschiedene Weisen erfolgen, beispielsweise durch das Aufbringen der Beschichtungsmasse als einer Art Spachtelmasse und der nachfolgenden Verteilung auf der Oberfläche der Trägerplatte mit einem Verteilwerkzeug, über ein rotierendes oder stempelartiges Druckverfahren, ein Aufspritzen der Beschichtungsmasse und/oder auf eine andere geeignete Weise. Die Beschichtungsmasse ist bevorzugt gut formbar ausgestaltet, beispielsweise als eine Masse mit einer fließfähigen bis hin zu einer pastösen Konsistenz, die gut auf die Oberfläche der Trägerplatte aufgebracht und verteilt werden kann und gut an der Oberfläche der Trägerplatte anhaftet.

Mit der Strukturierung ist ein Verfahrensschritt gemeint, in dem die Oberfläche der Beschichtungsmasse eine gewünschte räumliche Oberflächenstruktur erhält. Die Strukturierung kann durch entsprechende Werkzeuge vorgenommen werden, sei es über flächige Prägewerkzeuge, die entsprechende Ausformungen auf ihrer Oberfläche aufweisen, rotierende auf der Beschichtungsmasse abrollende und/oder in die Oberfläche eingreifende oder eindrückende Werkzeuge mit entsprechenden Ausformungen auf ihrer Oberfläche, punktuell wirkende Werkzeuge, die mit Druck, Kratzen, Tupfen, Schleifen oder auf eine andere geeignete Weise die Oberfläche zu verändern vermögen, oder mit anderen Hilfsmitteln oder einer beliebigen gleichzeitigen, aufeinanderfolgenden und/oder mehrfach wiederholten Kombination dieser Oberflächenbearbeitungen. Bei der Oberflächenbearbeitung kann die Beschichtungsmasse einerseits egalisiert werden, um eine zumindest annähernd gleich dicke Beschichtung der Trägerplatte mit der Beschichtungsmasse zu erhalten, und sie kann gleichzeitig oder aufeinanderfolgend punktuell oder in Teilbereichen der Oberfläche auch die Schichtdicke der Beschichtungsmasse verkleinern oder vergrößern, um die Oberfläche in ihrer Optik natürlicher und lebendiger erscheinen zu lassen.

Die Strukturierung und physikalische Trocknung kann gleichzeitig oder zeitlich versetzt zueinander erfolgen. Die Strukturierung der Beschichtungsmasse erfolgt aber vorzugsweise vor der physikalischen Trocknung, weil die Beschichtungsmasse dann noch am einfachsten auf eine gewünschte Weise formbar ist.

Über die Lackierung mit dem strahlenhärtenden UV-Lack erhält die Oberfläche ihre charakteristischen Oberflächeneigenschaften. Über die Lackierung und ihre besondere Weiterverarbeitung in Gestalt der Bestrahlung mit einem UV-Licht werden die Oberflächeneigenschaften eingestellt.

Bei dem erfindungsgemäßen Verfahren kann die Beschichtungsmasse insbesondere eine mineralische Komponente und/oder eine Pigmentierung aufweisen, um die Optik der Oberfläche der mit der erfindungsgemäßen Beschichtung versehenen Trägerplatte an die Optik einer nachzubildenden Oberfläche heranzuführen.

Die applizierte Beschichtungsmasse härtet durch die physikalische Trocknung, vorzugsweise eine Umlufttrocknung, zum Mineralbelag aus. Über die Verdunstung von Wasser und/oder Lösungsmitteln hinaus, die in der Beschichtungsmasse enthalten sein können, ist es möglich, dass bei der physikalischen Trocknung auch Inhaltsstoffe der Beschichtungsmasse chemisch miteinander reagieren und sich dadurch miteinander vernetzen, wodurch sich die Festigkeit und mechanische Belastbarkeit des ausgehärteten Mineralbelags verbessern können.

Die Farbgestaltung des Endproduktes kann durch die Pigmentierung der Beschichtungsmasse bestimmt sein, sodass diese als dekorbildende Schicht fungiert und die Oberfläche und/oder eine Kunstharzbeschichtung der Trägerplatte vollflächig oder teilweise nicht mehr sichtbar ist. Durch eine entsprechende Pigmentierung der Beschichtungsmasse kann der farbliche Grundton der Beschichtungsmasse auf einen beliebigen Wert eingestellt werden. Der farbliche Grundton der Beschichtungsmasse kann durch den UV-Lack auch je nach dessen Dicke und Zusammensetzung variiert werden.

Die Oberflächeneigenschaften der plattenförmigen Werkstückplatten werden maßgeblich durch das Aufbringen einer Decklackschicht mit dem strahlenhärtenden UV-Lack bestimmt. Der UV-Lack kann aufgewalzt, aufgerakelt oder aufgespritzt werden.

Die Auswahl des Auftragsverfahrens richtet sich im Wesentlichen nach der Oberflächenbeschaffenheit des ausgehärteten Mineralbelags aus Schritt D, sodass der Fachmann stets ein Verfahren auswählen wird, welches auf dem Substrat eine Decklackschicht mit möglichst homogener Auftragsgrammatur und möglichst glatter Oberfläche erzeugt.

Der UV-Lack ist ein Lack, der unter der Bestrahlung mit einem UV-Licht eine charakteristische Oberfläche ausbildet, insbesondere die erfindungsgemäße Mikrofaltung. Bei der Lackierung gemäß Schritt E wird eine fließfähige, polymerisierbare Kunststoffmasse, insbesondere ein strahlenhärtender UV-Lack, auf die Oberfläche des ausgehärteten Mineralbelags ausgebracht und anschließend mit UV-Licht bestrahlt.

Über die Lackierung ist es auch möglich, die Oberfläche individuell farblich zu gestalten. Der UV-Lack kann dazu transparent, semi-transparent oder mit einer geschlossenen Farbschicht ausgestaltet sein. Insbesondere kann durch die Lackierung die Oberfläche der Werkstückplatte so gestaltet werden, dass diese einen unikativen Charakter hat. Durch die besondere Art der Oberflächenbeschichtung sind auch Fingerabdrücke auf der Oberfläche weniger gut erkennbar. Insbesondere durch die Lackierung mit einer oder mehreren Lackschichten und der Bestrahlung der Lackmasse mit kurzwelliger UV-Strahlung wird eine angenehm samtartige Haptik, welche an eine geschliffene Natursteinoberfläche erinnert, und ein tiefer Glanzgrad, welcher für naturgetreue Beton- und Steinoberflächen typisch ist, gewährleistet. Funktionell dient die Versiegelung der Oberfläche der Werkstückplatte mit dem ausgehärteten UV-Lack auch zum Schutz gegen Umwelteinflüsse. So wird die Verschleiß- und Kratzbeständigkeit, Widerstandsfähigkeit gegenüber Chemikalien oder Haushaltsagenzien sowie die Reinigungsfreundlichkeit verglichen mit einer herkömmlichen mineral-basierten Oberfläche deutlich verbessert.

Unter dem Fachbegriff vakuumultravioletter Spektralbereich (VUV) wird eine hochenergetische Strahlung UV-Strahlung verstanden, welche im kurzwelligen Bereich an die UV-B Strahlung angrenzt. Das kurzwellige Ende des VUV-Spektralbereichs grenzt je nach Definition an den Bereich der EUV-Strahlung oder an die weiche Röntgenstrahlung. Eine vakuumultraviolette Strahlung besitzt eine höhere Energie als 5 eV und gehört damit zur hochenergetischen, ionisierenden Strahlung. Die Strahlung im vakuumultravioletten Spektralbereich (UV-C 280-100 nm) wird von Luft unter Bildung von Ozon absorbiert und bedarf somit einer Inertisierung, um sich auszubreiten. Die Strahlung kann sich ausbreiten, wenn die Bestrahlung beispielsweise unter Stickstoffinertisierung erfolgt. Als Lichtquelle ist insbesondere ein Xenon-Laser mit der monochromatischen Wellenlänge von 172 nm geeignet.

Die Ausbildung der Mikrofaltung beruht auf den Reaktionsfortschritt der Teilpolymerisation der oberflächennahen Schichten der Decklackschicht. Durch die kurzwellige UV-Bestrahlung wird eine radikalische Polymerisation initiiert. Die fortschreitende Teilpolymerisation führt infolge einer Volumenkontraktion zu Schrumpfungseffekten, welche eine Faltung an der Lack-Luft Grenzschicht bewirkt.

Das Schrumpfungsverhalten kann beispielsweise aus dem veränderten Abstand von bereits polymerisierten (Meth-)acrylaten mit ihrem kurz intramolekularen Abstand verglichen mit unvernetzten (Meth-)acrylaten mit ihrem lang intermolekularen Abstand resultieren.

Für die Mikrofaltung der oberflächennahen Schichten kann insbesondere eine kurzwellige UV-Strahlung, vorzugsweise UV-Licht emittiert von einem Xenon- oder auch Argon-Excimerlaser mit einer Wellenlänge von 172 oder 220 nm, verwendet werden. Die hohe Photonenenergie initiiert eine Radikalbildung und startet die Polymerisation. Die hohe Energieaufnahme, die auch unter dem Fachbegriff des Extinktionskoeffizienten bekannt ist, innerhalb der oberflächennahen Schichten verhindert ein tiefes Eindringen der Strahlung, sodass die oberflächenfernen Lackschichten im flüssigen Zustand verbleiben. Es ergibt sich ein Bild, wonach die oberflächennahen Schichten plastisch ungehindert die Beschaffenheit der oberflächenfernen Lackschichten zu Mikrofalten verformen können. Mit diesem Verfahren kann die Ausbildung einer hohen Faltungsamplitude und damit einhergehend ein tiefer Glanzgrad erzielt werden. Das gilt insbesondere dann, wenn flexible, prepolymere Acrylate mittleren Molekulargewichtes von 750 bis 2000 g/mol und einer Funktionalität von höchstens 3.5 in dem verwendeten UV-Lack enthalten sind.

Der Glanz wird in Anlehnung gemäß ISO 2813: 2015 gemessen, wobei die Messung an nicht-tiefenstrukturierten, planen Stellen der Werkstoffplatte erfolgt. Dabei wird der Glanzgrad bei einem Prüfwinkel von 60° und 85° gemessen. Überraschenderweise wurde festgestellt, dass bei dunklen Farbstellungen ein niedrigerer Glanzgrad vorlag als bei einer helleren Farbstellung. Es wird bei dunklen Farbstellungen ein Glanzgrad bei 60° von weniger als 5, bevorzugt weniger als 2 und bei hellen Farbstellungen von weniger als 7, bevorzugt weniger als 3 erhalten.

Ein weiterer Vorteil dieses Verfahrens ist, dass durch die oberflächliche Mikrofaltung nur eine geringere Neigung besteht, Fingerabdrücke sichtbar werden zu lassen. Bei einer Berührung mit der bloßen Hand steht durch die Mikrofaltung nur eine geringe Kontaktfläche zur Verfügung, sodass der Biofilm der Haut nicht auf die mikrostrukturierte Oberfläche übertragen werden kann. Durch den sehr niedrigen Glanzgrad sind selbst bei dunklen Oberflächen wie beispielsweise schwarz oder anthrazitgrau keine Fingerabrücke im Quer- oder Streiflicht zu erkennen. Diese Eigenschaft ist umso stärker ausgebildet, je niedriger der Glanzgrad bei 85 ° Reflexionswinkel ausfällt. Die Eigenschaft ist im Allgemeinen von tiefmatten Dekoroberflächen bekannt und wird dort als "Anti-Fingerprint Effekt" bezeichnet.

Nach einer Ausgestaltung der Erfindung wird die Beschichtungsmasse auf eine kunstharzbeschichtete Trägerplatte aufgebracht. Die Kunstharzbeschichtung kann als eine Vorbehandlung der im Schritt A bereit gestellten Trägerplatte erfolgen. Die Kunstharzbeschichtung kann als Haftvermittler dienen, die beispielsweise als fließfähiges Kunststoffmaterial, bevorzugt auf Basis eines polymerisationsfähigen, mehrfachfunktionellen Acrylatsystems, auf die Trägerplatte aufgebracht wird. Zum Erzielen einer guten Verbundeigenschaft der Beschichtungsmasse zur Trägerplatte kann deren Oberfläche geschliffen oder auf andere Weise aufgerauht werden, um die Anhaftung der Kunstharzbeschichtung zu verbessern. Die Kunstharzbeschichtung kann aus einem polymerisationsfähigen, mehrfachfunktionellen Acrylatsystem bestehen.

Die Beschichtungsmasse verbindet sich bei der nachfolgenden physikalischen Trocknung nicht oder zumindest nicht überwiegend mit dem Material der Trägerplatte, sondern mit dem Material der Kunstharzbeschichtung, das nach dessen Polymerisation wiederum gut mit dem Material der Trägerplatte fest vernetzt ist. Die Kunstharzbeschichtung bildet auf diese Weise einen Haftvermittler. Der Auftrag des Haftvermittlers kann durch einen Walz-, Gieß-, Spritz- und/oder Sprühvorgang auf die Trägerplatte in einem einzigen Arbeitsgang erfolgen. Die Trockenfilmdicke der Kunstharzbeschichtung beträgt vorzugsweise 2 bis 25 µm, bevorzugt 2 bis 10 µm, insbesondere bevorzugt 3 bis 8 µm. Über die Kunstharzbeschichtung als Haftvermittler wird ein stoffschlüssiger Verbund der Beschichtungsmasse zur Trägerplatte erreicht. Der endgehärtete Mineralbelag weist eine dauerhafte Verbindung zur Trägerplatte auf und zeigt eine hohe mechanische und physikalische Belastbarkeit.

Nach einer Ausgestaltung der Erfindung wird die Beschichtungsmasse im Schritt B durch Auflegen eines Trennfilms unter Anlegung eines geringen Flächendrucks bei Umgebungstemperatur strukturiert. Die Strukturierung kann durch den Trennfilm hindurch über ein auf die vom Trennfilm abgedeckten Fläche aufgelegtes und entsprechend geformtes Werkzeug so erfolgen, dass eine authentische Natur- und Steinoberflächenstruktur ausgebildet wird. Das Wiederentfernen dieses Trennfilmes nach der Strukturierung ermöglicht die physikalische Trocknung der applizierten Beschichtungsmasse.

Nach einer Ausgestaltung der Erfindung enthält die Beschichtungsmasse als Bindemittel eine filmbildende Polymerdispersion, als Matrixbestandteil mindestens einen anorganischen Füllstoff und als farbgebenden Bestandteil mindestens ein anorganisches Pigment. Die Beschichtungsmasse enthält Füllstoffe und Pigmente vorzugsweise in solchen Mengen einer Pigment-Volumen-Konzentration von 15 bis 85 %, besonders bevorzugt 20 bis 75 %, insbesondere bevorzugt 50 bis 65 %. Geeignete Füllstoffe umfassen die Gruppe der Carbonate, Kaolin, Glimmer, Aluminiumoxid, Talkum, Feldspalte, Korund, Quarz, Bentonit, Schwerspate, Flussspate, Silikate etc. Die Beschichtungsmasse kann mit Farbpigmenten eingefärbt sein, um einen farbigen Mineralbelag zu erhalten. Die Beschichtungsmasse kann Farbmittel aus den Gruppen der anorganischen, organischen und/oder mineralischen Pigmente enthalten. Dabei ist der Grundton der Beschichtungsmasse in weiten Teilen variierbar. So sind beispielsweise durch Einfärbungen Oberflächen von tiefschwarz über rotbraun bis weiß möglich. Zur Einstellung des Farbtons und der Deckkraft/Farbtiefe werden vorzugsweise Mischungen aus mehreren anorganischen Farbpigmenten und/oder organischen Farbstoffen verwendet. Die Eigenfarbe des Mineralbelages ist für gewöhnlich hellgrau. Zudem lassen sich durch Zugabe von feinteiligen Zuschlägen wie eingefärbten Quarzkörnern, mikronisierten Natursteinen wie Sandstein, Travertin oder Basalt weitere farbliche Gestaltungsmöglichkeiten schaffen. Die Füllstoffe können als Einzelkomponente eingesetzt werden. Als vorteilhaft haben sich Füllstoffmischungen aus mehreren sortenreichen Füllstoffen bewährt. Die Beschichtungsmasse besitzt üblicherweise eine Dichte von ca. 1,6 g/cm³ und eine Viskosität nach Brookfield von ca. 10 bis 60 Pas, vorzugsweise 35 Pas, bei 23 °C.

Nach einer Ausgestaltung der Erfindung weist die Beschichtungsmasse die folgenden Komponenten auf:
30 bis 90 % Gewichtsanteile anorganische Füllstoffe,
10 bis 30 % Gewichtsanteile wässrige Polymer-Dispersion,
10 bis 30 % Gewichtsanteile Wasser,
1 bis 10 % Gewichtsanteile feinteiliger Zuschläge,
wahlweise 0.1 % Gewichtsanteile optionale Konservierungsmittel,
wahlweise 0.1-5.0 % Gewichtsanteile optionaler Additive, und
wahlweise 0.5-7.0 % Gewichtsanteile optionaler Verstärkungsfüllstoffe.

Bei den Füllstoffen kann es sich bevorzugt um Tonmineralien, insbesondere bevorzugt ein Gemisch aus Carbonaten, Kaolin, Talkum, Feldspalt, Schwerspat, Flussspat, Silikate mit einer Korngröße kleiner als 1 µm handeln. Die wässrige Polymer-Dispersion kann einen Feststoffanteil von 40-60 % aufweisen. Als feinteilige Zuschläge kommen beispielsweise eingefärbte Quarzkörner und/oder mikronisierte Natursteine, je mit einer Korngröße größer als 1 µm, in Betracht. Bei den optional in der Beschichtungsmasse enthaltenen Additiven kann es sich beispielsweise um Pigmente, Verlaufsmittel, Entschäumer, Polysaccharid, Carboxymethylcellulose, Hydroxyethylcellulose (HEC), Rheologieadditive und dergleichen handeln. Als optionale Verstärkungsfüllstoffe können in der Beschichtungsmasse beispielsweise Polypropylenfasern, Polyvinylalkohol, Polyamidfasern, Glasfasern, Keramikfasern, und nadelförmiges Wollastonit enthalten sein. Die Gewichtsanteile der Einzelbestandteile können in den angeben Mengengrenzen so gewählt werden, dass die Summe stets 100 % beträgt.

Nach einer Ausgestaltung der Erfindung umfassen die anorganischen Füllstoffe die Gruppe der Carbonate, Kaolin, Glimmer, Aluminiumoxide, Talkum, Feldspate, Quarze, Bentonite, Schwerspate, Flussspate und Silikate.

Nach einer Ausgestaltung der Erfindung weist eine wässrige Polymer-Dispersion ein ein Acrylat-, Methacrylat- oder Vinylacetat-Homopolymerisat und/oder ein Styrol-Acrylat-Copolymerisat mit einem Feststoffgehalt von 20 - 80 %, besonders 30 - 70 %, insbesondere 40 - 60 % auf.

Nach einer Ausgestaltung der Erfindung weist die Beschichtungsmasse eine Pigment-Volumen-Konzentration (PVK) von 15 bis 85 %, besonders bevorzugt 20 bis 75 %, insbesondere bevorzugt 50 bis 65 % auf. Mit den vorgeschlagenen Pigment-Anteilen an der Beschichtungsmasse können gute Farbwirkungen mit der Beschichtungsmasse erzielt werden.

Nach einer Ausgestaltung der Erfindung wird die Beschichtungsmasse auf die vorbehandelte Trägerplatte in mindestens einer Lage aufgewalzt. Mit einem Walzverfahren können gute Beschichtungsergebnisse erzielt werden.

Nach einer Ausgestaltung der Erfindung wird die Fläche der Beschichtungsmasse nach der Beschichtung der Trägerplatte partiell mit einer Farbschicht versehen. Die Farbschicht kann separat von der Beschichtung der Beschichtungsmasse mit dem UV-Lack auf die Beschichtungsmasse aufgebracht werden, beispielsweise im Druckverfahren oder mit einer sonstigen Lackierung. Durch die nur partiell aufgebrachte Farbschicht auf dem Mineralbelag ist es möglich, eine sehr realistisch wirkende Nachbildung einer Beton- oder Steinoberfläche zu erhalten.

Nach einer Ausgestaltung der Erfindung erfolgt ein Strukturieren der Beschichtungsmasse im Nasszustand mithilfe einer Releasefolie, welche auf die Beschichtungsmasse gelegt und unter geringerem Flächendruck eingeprägt und rückstandsfrei wieder entfernt wird. Die Releasefolie kann auf die gesamte Oberfläche der Beschichtungsmasse aufgelegt werden, oder sie wird nur abschnittweise auf die Oberfläche aufgelegt. Unter geringem Flächendruck ist ein Druck gemeint, der einen Wert von 50 N/cm² nicht überschreitet. Mit dem Aufdrücken einer Releasefolie auf die Beschichtungsmasse kann eine oberflächenglatte, mit Lunkern akzentuierte Oberfläche erzeugt werden. Die Folie kann leicht aufgelegt und auch wieder abgezogen werden. Die Folie hat dabei eine Dicke von weniger als 1 mm. Die Profiltiefe der dreidimensionalen Struktur, die man durch das Aufdrücken der Releasefolie auf die Beschichtungsmasse erhält, kann bis zu 900 µm, vorzugsweise bis zu 500 µm betragen. Diese vergleichsweise geringe Eindringtiefe reicht aus, um die gewünschte Natürlichkeit des optischen Effekts herzustellen.

Nach einer Ausgestaltung der Erfindung wird eine Farblackierung mittels wasserbasiertem Farbmittel auf die ausgehärtete oder mindestens teilgehärtete Beschichtungsmasse appliziert. Die Farblackierung dient zur weiteren farblichen Oberflächengestaltung. Die Applikation kann mit einem Druckverfahren, insbesondere einem Siebdruckverfahren, auch in Gestalt eines Digitaldrucks, erfolgen. Zudem ist es möglich, einen Farblack aufzutragen, welcher über ein Sprühverfahren mittels Airbrush- oder Airlessmethode appliziert wird. Eine Kombination aus Pigmentierung der Beschichtungsmasse mit dem Bedrucken und/oder Farblackieren ermöglicht eine vielfältige Farbgestaltung, welche der Stein- und Betonimitation ein charaktervolles Aussehen vermittelt. So kann der Farbauftrag ein- oder mehrfarbig, partiell oder vollflächig erfolgen. Im Grenzfall kann der Farbauftrag partiell einfarbig erfolgen, um Marmorierung oder Wolkigkeit der Oberfläche zuzufügen. Der Druckvorgang kann auf einer nassen, vorgetrockneten oder endgehärteten Beschichtungsmasse erfolgen. Das Farbmittel kann aus einem Gemisch der jeweiligen Farbkomponente bestehen, beispielsweise aus anorganischer Pigmentdispersion und/oder organischer Pigmentdispersion, einem oder mehreren polymeren Bindemitteln, Feuchthaltemitteln, organischen Lösungsmitteln, Rheologieadditiven sowie Oberflächenadditiven. Der Farbauftrag, einschließlich des digitalen Druckverfahrens, Siebdruckverfahrens und Sprühverfahrens wird zur Abgrenzung an die Pigmentierung der Beschichtungsmasse hier als Druckverfahren bezeichnet.

Nach einer Ausgestaltung der Erfindung wird im Schritt D mit der physikalischen Trocknung ein ausgehärteter Mineralbelag gebildet, welcher auf Basis von Tonmineralien und zumindest einer Polymer-Dispersion überlackierbar ist. Um diese überlackierbare Fläche zu erhalten, sind auch schon in der Beschichtungsmasse Tonmineralien und die zumindest eine Polymer-Dispersion enthalten. Bei der Polymer-Dispersion kann es sich vorzugsweise um eine wässrige Stryolacrylat-Dispersion handeln. Als Voraussetzung für die Überlackierbarkeit gilt ein nicht saugfähiger Untergrund. Andernfalls ließe sich bei porösen Oberflächen ein Wegschlagen der polymerisierbaren Lackmasse und somit eine Blasenbildung in der Decklackschicht beobachten. Die Konsistenz der Beschichtungsmasse kann sich im Lauf der Trocknung von fließfähig über pastös hin zu erdfeucht verändern. Im ausgehärtetem Zustand wird die Beschichtungsmasse zur Abgrenzung hier als Mineralbelag bezeichnet. Es kann eine Acrylatdispersion ausgewählt werden, welche im ausgehärtetem Mineralbelag kein wesentliches Schrumpfverhalten aufweist, sodass bei einer einseitigen Beschichtung (nur Sichtseite/A-Seite) kein oder geringes Verzugsverhalten (engl. curling) auftritt.

Nach einer Ausgestaltung der Erfindung beträgt die Trockenschichtdicke des Mineralbelags 50 bis 12.000 µm, bevorzugt 200 bis 5.000 µm, insbesondere bevorzugt 2.500 bis 4.500 µm. Die angegebene Trockenschichtdicke reicht aus, um eine ansprechende Optik bei ausreichenden sonstigen Oberflächeneigenschaften zu erzielen.

Nach einer Ausgestaltung der Erfindung erfolgt die physikalische Trocknung unter atmosphärischen Bedingungen. Die Umgebungstemperatur und relative Luftfeuchtigkeit kann beliebig sein, bevorzugt wird ein Parameterfenster von 15 bis 35 °C sowie einer Luftfeuchtigkeit von 20 bis 90 %, insbesondere bevorzugt 17 bis 25 °C sowie 30 bis 75 % gewählt. Typische Trockenschichtdicken des ausgehärteten Mineralbelags betragen 50 bis 12.000 µm, bevorzugt 2.000 bis 8.000 µm, insbesondere bevorzugt 2.500 bis 4.500 µm.

Nach einer Ausgestaltung der Erfindung wird im Schritt E ein UV-Lack verwendet, dem Monomere mit einer langsamen Reaktionskinetik beigemischt sind. Bei der Lackformulierung von monofunktionellen Monomeren mit einer langsamen Reaktionskinetik kann es sich beispielsweise um Monomere wie Methacrylsäuredodecylester und Methacrylsäureoctadecylester handeln, die eine höhere Faltungsamplitude und damit einen niedrigen Glanzgrad begünstigen. Durch die stoffliche und technologische Kombination lässt sich die Faltungsamplitude der Mikrostruktur derartig einstellen, dass die optischen wie auch haptischen Eigenschaften, denen von natürlichen Steinoberflächen besonders gut imitiert werden.

Nach einer Ausgestaltung der Erfindung wird im Schritt E eine transparente Decklackschicht aufgebracht. Die Decklackschicht kann aus einem Klarlack gebildet sein. Die optische Anmutung der Oberfläche der plattenförmigen Werkstückplatte wird dadurch wesentlich durch die Farbwirkung und Pigmentierung der Beschichtungsmasse bestimmt.

Nach einer Ausgestaltung der Erfindung wird die Lackmasse mit einer Schichtdicke von 5 bis 23 µm, bevorzugt von 10-18 µm auf den ausgehärteten Mineralbelag aufgebracht. Die angegebene Schichtdicke reicht einerseits aus, um die erfindungsgemäße Mikrofaltung herbeizuführen, andererseits wird aber auch nicht zu viel UV-Lack verbraucht, so dass der Materialverbrauch und die produktionsbedingte Umweltbelastung auf einem niedrigen Niveau bleiben.

Nach einer Ausgestaltung der Erfindung wird der ausgehärtete Mineralbelag aus Schritt D mit der Lackmasse über einen Walzenauftrag lackiert. Durch gleichmäßigen Auftrag wird nur das Oberflächenplateau lackiert, Hohlräume wie Lunker und Risse bleiben unlackiert. Durch die anschließende Mikrofaltung der Lackmasse ergibt sich ein optisch interessanter Kontrast, welcher das Oberflächenrelief zusätzlich akzentuiert und den natürlichen Charakter verstärkt.

Nach einer Ausgestaltung der Erfindung wird als Vorpolymerisation eine weitere Bestrahlung mit elektromagnetischer Strahlung zwischen dem Lackauftrag und der Bestrahlung im Schritt F durchgeführt. Die Vorpolymerisation erfolgt bevorzugt in einem Wellenlängenbereich von 254 bis 410 nm, insbesondere bevorzugt ist LED-Licht mit Emissionspeak von 365 nm, 385 nm, 395 nm oder 405 nm. Vorteilhaft kann eine Vorgelierung zum Erzielen von glatten Oberflächentextur verwendet werden, wobei die minimale Rauheit geschliffene, polierte oder gestrahlte Stein -und Betonoberflächen besonders gut imitiert.

Nach einer Ausgestaltung der Erfindung werden im UV-Lack als Filmbildner Bindemittel aus der Stoffgruppe der aliphatischen Urethanacrylate und/oder Polyesteracrylat in Verbindung mit monomerischen Reaktivverdünnern verwendet. Bei den monomerischen Reaktivverdünnern kann es sich beispielsweise um Tripropylenglycoldiacrylat (TPGDA), Hexandioldiacrylat (HDDA) oder Dipropylendiacrylat (DPGDA) handeln. Gewöhnlich stellt die stoffliche Zusammensetzung der flüssigen, polymerisierbaren Lackmasse neben den technologischen Einflussgrößen eine wichtige Stellgröße zur Erreichung tiefmatten Oberfläche dar. Es hat sich gezeigt, dass die polymerisierbare Lackmasse bevorzugt eine matte Oberflächenoptik aufweist, wenn als Filmbildner die genannten Bindemittel als Filmbildner verwendet werden.

Nach einer Ausgestaltung der Erfindung wird die UV-Strahlung im Schritt F monochromatisch emittiert. Bei einer monochromatischen Strahlung handelt es sich um ein im engeren Sinne einfarbiges sichtbares Licht, bei dem die elektromagnetische Strahlung in einer genau definierten Frequenz bzw. Vakuumwellenlänge von der Lichtquelle emittiert wird.

Nach einer Ausgestaltung der Erfindung erfolgt die Bestrahlung unter sauerstoffreduzierter Atmosphäre, besonders bevorzugt unter Stickstoffatmosphäre mit Reinheitsgraden von weniger als 200 ppm Sauerstoff. Unter den angegebenen Bestrahlungsbedingungen wird eine ausgeprägte Mikrofaltung erzielt.

Gemäß einer bevorzugten Ausgestaltung der Erfindung umfasst die Strahlenhärtung gemäß Schritt F die Verfahrensschritte
- Bestrahlen der polymerisierbaren Lackmasse mit monochromatischem VUV-Licht, vorzugsweise mit einer Emissionswellenlänge von 172 nm, zur Ausbildung der Mikrofaltung und
- die Mikrofaltung und die aus dem vorherigen Schritt erhaltene Beschichtung wird in einer weiteren Bestrahlungseinheit mit langwelligem UV-Licht oder niederenergetischer Elektronenstrahlung fixiert und endgehärtet. Mit der weiteren Bestrahlungseinheit wird eine plattenförmige Werkstoffplatte mit einer authentischen Beton- oder Steinstruktur bei gleichzeitig tiefen Glanzgrad erzeugt.

Nach einer Ausgestaltung der Erfindung wird eine Trägerplatte in einem Arbeitsgang auf mehreren Seiten mit einem kunststoffharz-imprägnierten Dekorfilm beschichtet. Bei dieser Verarbeitungsweise ergibt sich eine hohe Durchsatzleistung einer Fertigungsanlage. Ein mehrfacher Durchgang einer Trägerplatte durch den Herstellungsprozess ist nicht erforderlich, um mehrere Seiten der Oberfläche einer Trägerplatte mit der erfindungsgemäßen Beschichtung zu versehen.

Nach einer Ausgestaltung der Erfindung wird bei dem Verfahren eine plattenförmige Werkstückplatte mit tiefmatter Oberfläche und einem Glanzgrad von unter 3 Glanzpunkten bei 60 ° Reflexionswinkel gemäß DIN 2813 hergestellt. Eine solche Oberfläche hat eine große Ähnlichkeit mit Oberflächen aus echtem Beton oder Naturstein.

Es wird darauf hingewiesen, dass die vorstehend aufgeführten Ausgestaltungen der Erfindungen jeweils für sich, aber auch in einer beliebigen Kombination untereinander mit dem Verfahren des Anspruchs 1 kombinierbar sind.

Die Erfindung wird im Folgenden anhand der Ausführungsbeispiele nochmals beispielhaft erläutert.

### Ausführungsbeispiel 1:

Werkstoffplatte in grauer Betonoptik mit geschlossenporiger Struktur Es wird eine pigmentierte Beschichtungsmasse auf eine beidseitig kunstharzbeschichtete Trägerplatte aufgebracht. Vor dem Aufbringen wurde die Trägeroberfläche durch eine Flächenschleifmaschine vorbehaltet. Die Beschichtung erfolgt einseitig auf der Oberseite (A-Seite).

Die pigmentierte Beschichtungsmasse ist im Grundton hellgrau pigmentiert. Zur Pigmentierung wird eine schwarze Farbmasse basierend auf einen Farbruß sowie eine weiße Farbmasse basierend auf Titandioxid eingesetzt. Die Deckkraft wird über die Menge und der Farbton über das Verhältnis der Abtönfarben eingestellt.

Nachdem Auftrag der Beschichtungsmasse erfolgt im Nasszustand das Strukturieren der Oberfläche bei Umgebungstemperatur mithilfe einer Releasefolie, welche auf die beschichtete Seite abschnittweise gelegt und unter einen geringeren Flächendruck (< 50 N/cm²) eingeprägt wird. Nach dem Verpressen wird die Folie rückstandsfrei wieder entfernt. Es wird eine oberflächenglatte, mit Lunkern akzentuierte Oberfläche erhalten.

Es erfolgt anschließend ein Nass-in-Nass Farbauftrag mittels Sprühapplikation. Eine anthrazitfarbene Dispersionsfarbe wird hierzu partiell, punktweise aufgetragen. Dieser Vorgang entspricht optisch einem Marmorieren der Oberfläche.

Anschließend erfolgt die physikalische Trocknung der Oberfläche durch Umlufttrocknung. Nach dem Trocken erfolgt eine Lackierung mit einer polymerisierbaren Lackmasse, vorzugsweise einem UV-Klarlack, und es folgt ein abschnittweises Bestrahlen mit kurz- und langwelliger UV-Strahlung. Durch die kurzwellige Bestrahlung wird ein Glanzgrad der Decklackschicht von weniger als 5 Glanzeinheiten bei 60° Reflexionswinkel erhalten. Die Ausbildung der Mikrofaltung im Schritt D schränkt die Wahrnehmung und die Transparenz der Farbschicht nicht ein.

Die Unterseite (B-Seite) wird nicht weiter behandelt und entspricht der Lieferform einer Melaminharzbeschichtung.

Die erzeugte Werkstückplatte weist eine authentische Betonoptik mit einer samtartigen Haptik auf.

### Ausführungsbeispiel 2:

Werkstoffplatte beidseitig in beiger Betonoptik mit tiefmatten Glanzgrad

Die Beschichtung erfolgt beidseitig auf Oberseite (A-Seite) und Unterseite (B-Seite). Beginnend wird die Beschichtung zunächst unterseitig (B-Seite) appliziert und bei endgehärtem Zustand auf der Oberseite wiederholt. Als Trägerplatte dient eine beidseitig melaminharzbeschichte Spanplatte.

Vor dem jeweiligen Auftrag der Beschichtungsmasse wird ein sog. Primer auf die Trägerplatte aufgebracht. Hierzu wird im Walzenauftragsverfahren die Trägeroberfläche vollflächig bestrichen und durch UV-Bestrahlung zwischengehärtet.

Die Beschichtungsmasse die pigmentiert sein kann, wird mit einem Auftragsverfahren im kontinuierlichen Rakelverfahren auf die Oberfläche beschichtet.

Um eine möglichst authentische Oberflächenstruktur zu erhalten, wird ein Trennfilm auf die mineralische Beschichtung ausgelegt, mit geringen Flächendruck bei Umgebungstemperatur fixiert und wieder entfernt.

Es folgt die physikalische Trocknung der Beschichtungsmasse beispielsweise im Umlufttrockner. Es wird ein Mineralbelag mit einer Materialdicke von mehr als 200 µm erhalten.

Abschließend wird UV-Lack im Mehrwalzenauftrag mit einer Auftragsmenge von 5 bis 20 g/m² auf den Mineralbelag appliziert.

In einer bevorzugten Ausführungsform wird die Decklackschicht mit kurzwelliger UV-Strahlung von 172 nm unter Stickstoff-Inertisierung bestrahlt, wobei die oberste Materialschicht teilpolymerisiert und eine Mikrofaltung ausgebildet wird. Die Mikrofaltung wird durch langwellige UV-Strahlung fixiert und die Decklackschicht endgehärtet. Die plattenförmige Werkstückplatte ist somit stapelfähig. Die erzeugte Werkstückplatte weist eine tiefmatte Oberfläche mit einem Glanzgrad von unter 2 Glanzpunkten bei 60° Reflexionswinkel gemäß DIN 2813 auf.

### Ausführungsbeispiel 3:

Werkstoffplatte in Steinoptik mit hydrophoben Eigenschaften Nach der Verfahrensweise des Beispiel 1 ist die polymerisierbare Lackmasse, vorzugsweise ein UV-Acrylatlack, mit einer polysiloxan-basierten Hydrophobierungskomponente zum Erzielen einer hydrophoben, schmutzabweisenden und verschleißfesten Lackierung.

Der UV-Lack wird im Einwalzenauftrag auf die Oberfläche aufgebracht und anschließend mit kurzwelligen UV-Licht bestrahlt. Die Teilpolymerisation führt zur photochemischen Mikrofaltung. Anschließend wird die Lackmasse durch eine langweilige UV-Bestrahlung unter sauerstoffarmen Atmosphäre vollständig ausgehärtet. Durch die Inertisierung wird ein hoher Vernetzungsgrad mit einem Doppelbindungsumsatz von mehr als 80 % erhalten und somit eine besonders abriebfeste Oberfläche hergestellt. Die erzeugte Werkstückplatte weist tiefmatte Oberfläche mit einem Glanzgrad von unter 3 Glanzpunkten bei 60° Reflexionswinkel gemäß DIN 2813, eine Oberflächenenergie von 26 mN/M gemäß DIN 55660-2:2011 sowie eine Kratzfestigkeit von 4.0 N gemäß DIN 14323:2022 auf.

Die vorstehend beschriebenen Ausführungsbeispiele dienen nur der Erläuterung der Erfindung. Keinesfalls ist die Erfindung auf die vorstehenden Ausführungsbeispiele beschränkt. Dem Fachmann bereitet es keine Schwierigkeiten, die vorstehend beschriebenen Ausführungsbeispiele auf eine ihm als geeignet erscheinende Weise abzuwandeln, um das Verfahren an die Gegebenheiten und Anforderungen eines konkreten Anwendungsfalls anzupassen.

## Patentansprüche

1. Verfahren zum Herstellen einer plattenförmigen Werkstückplatte mit den Schritten
(A) Bereitstellen einer Trägerplatte,
(B) Beschichtung der Trägerplatte mit einer Beschichtungsmasse,
(C) Strukturierung der Beschichtungsmasse,
(D) physikalische Trocknung der Beschichtungsmasse zum ausgehärteten Mineralbelag,
(E) Lackierung des Mineralbelages mit einem strahlenhärtenden UV-Lack, und
(F) Bestrahlung der Lackmasse mit einer Strahlung im vakuumultravioletten (VUV) Spektralbereich derartig, dass sich eine Mikrofaltung mit einer Strukturtiefe von weniger als 5 µm ausbildet.

2. Verfahren nach Anspruch 1, **dadurch gekennzeichnet, dass** die Beschichtungsmasse auf eine kunstharzbeschichtete Trägerplatte aufgebracht wird.

3. Verfahren nach einem der vorhergehenden Ansprüche, wobei die Beschichtungsmasse als Bindemittel eine filmbildende Polymerdispersion, als Matrixbestandteil mindestens einen anorganischen Füllstoff und als farbgebenden Bestandteil mindestens ein anorganisches Pigment enthält.

4. Verfahren nach einem der oben genannten Ansprüche, wobei die Beschichtungsmasse die nachfolgenden Komponenten aufweist:
30 bis 90 % Gewichtsanteile anorganische Füllstoffe,
10 bis 30 % Gewichtsanteile wässrige Polymer-Dispersion,
10 bis 30 % Gewichtsanteile Wasser,
1 bis 10 % Gewichtsanteile feinteilige Zuschläge,
wahlweise 0.1 % Gewichtsanteile optionale Konservierungsmittel,
wahlweise 0.1-5.0 % Gewichtsanteile optionale Additive,
wahlweise 0.5-7.0 % Gewichtsanteile optionale Verstärkungsfüllstoffe.

5. Verfahren nach Anspruch 4, wobei die anorganischen Füllstoffe die Gruppe der Carbonate, Kaolin, Glimmer, Aluminiumoxide, Talkum, Feldspate, Quarze, Bentonite, Schwerspate, Flussspate und Silikate umfassen.

6. Verfahren nach Anspruch 4, wobei eine wässrige Polymer-Dispersion ein Acrylat-, Methacrylat- oder Vinylacetat-Homopolymerisat und/oder ein Styrol-AcrylatCopolymerisat mit einem Feststoffgehalt von 20 - 80 %, besonders 30 - 70 %, insbesondere 40 - 60 % aufweist.

7. Verfahren nach einem der Ansprüche 4, 5 oder 6, wobei die Beschichtungsmasse eine Pigment-Volumen-Konzentration (PVK) von 15 bis 85 %, besonders bevorzugt 20 bis 75 %, insbesondere bevorzugt 50 bis 65 % aufweist.

8. Verfahren nach einem der vorhergehenden Ansprüche, wobei die Beschichtungsmasse (23) auf die vorbehandelte Trägerplatte in mindestens einer Lage aufgewalzt wird.

9. Verfahren nach einem der vorhergehenden Ansprüche, wobei die formbare Beschichtungsmasse im Schritt B durch Auflegen eines Trennfilms unter Anlegung eines geringen Flächendrucks bei Umgebungstemperatur strukturiert wird.

10. Verfahren nach einem der vorhergehenden Ansprüche, **dadurch gekennzeichnet, dass** die Fläche der Beschichtungsmasse nach der Beschichtung der Trägerplatte partiell mit einer Farbschicht versehen wird.

11. Verfahren nach einem der vorhergehenden Ansprüche, wobei ein Strukturieren der Beschichtungsmasse im Nasszustand mithilfe einer Releasefolie erfolgt, welche auf die Beschichtungsmasse gelegt und unter geringerem Flächendruck eingeprägt und rückstandsfrei wieder entfernt wird.

12. Verfahren nach einem oder mehreren der oben genannten Ansprüche, wobei eine Farblackierung mittels wasserbasiertem Farbmittel auf die ausgehärtete oder mindestens teilgehärtete Beschichtungsmasse appliziert wird.

13. Verfahren nach einem der vorhergehenden Ansprüche, wobei im Schritt D mit der physikalischen Trocknung ein ausgehärteter Mineralbelag gebildet wird, welcher auf Basis von Tonmineralien und zumindest einer Polymer-Dispersion überlackierbar ist.

14. Verfahren nach einem der vorhergehenden Ansprüche, wobei die Trockenschichtdicke des Mineralbelags 50 bis 12.000 µm, bevorzugt 200 bis 5.000 µm, insbesondere bevorzugt 2.500 bis 4.500 µm beträgt.

15. Verfahren nach einem der vorhergehenden Ansprüche, wobei die physikalische Trocknung unter atmosphärischen Bedingungen erfolgt.

16. Verfahren nach einem der vorhergehenden Ansprüche, **dadurch gekennzeichnet, dass** im Schritt E ein UV-Lack verwendet wird, dem Monomere mit einer langsamen Reaktionskinetik beigemischt sind.

17. Verfahren nach einem der vorhergehenden Ansprüche, **dadurch gekennzeichnet, dass** im Schritt E eine transparente Decklackschicht aufgebracht wird.

18. Verfahren nach einem der vorhergehenden Ansprüche, wobei die Lackmasse mit einer Schichtdicke von 5 - 23 µm, bevorzugt von 10 - 18 µm auf den ausgehärteten Mineralbelag aufgebracht wird.

19. Verfahren nach einem der vorhergehenden Ansprüche, wobei der ausgehärtete Mineralbelag aus Schritt D mit der Lackmasse über einen Walzenauftrag lackiert wird.

20. Verfahren nach einem der vorhergehenden Ansprüche, wobei als Vorpolymerisation eine weitere Bestrahlung mit elektromagnetischer Strahlung zwischen dem Lackauftrag und der Bestrahlung im Schritt F durchgeführt wird.

21. Verfahren nach einem der vorhergehenden Ansprüche, wobei im UV-Lack als Filmbildner Bindemittel aus der Stoffgruppe der aliphatischen Urethanacrylate und/oder Polyesteracrylat in Verbindung mit monomerischen Reaktivverdünnern verwendet werden.

22. Verfahren nach einem der vorhergehenden Ansprüche, **dadurch gekennzeichnet, dass** die Strahlung im Schritt F monochromatisch emittiert wird.

23. Verfahren nach einem der vorhergehenden Ansprüche, wobei die Bestrahlung unter sauerstoff reduzierter Atmosphäre, besonders bevorzugt unter Stickstoffatmosphäre mit Reinheitsgraden von weniger als 200 ppm Sauerstoff, erfolgt.

24. Verfahren nach einem der vorhergehenden Ansprüche, wobei die Strahlenhärtung gemäß Schritt F die Verfahrensschritte umfasst:
- Bestrahlen der polymerisierbaren Lackmasse mit monochromatischem VUV-Licht, vorzugsweise mit einer Emissionswellenlänge von 172 nm, zur Ausbildung der Mikrofaltung, und
- die Mikrofaltung und die aus dem vorherigen Schritt erhaltene Beschichtung wird in einer weiteren Bestrahlungseinheit mit langwelligem UV-Licht oder niederenergetischer Elektronenstrahlung fixiert und endgehärtet.

25. Verfahren nach einem der vorhergehenden Ansprüche, **dadurch gekennzeichnet, dass** eine Trägerplatte in einem Arbeitsgang auf mehreren Seiten mit einem kunststoffharz-imprägnierten Dekorfilm beschichtet wird.

26. Verfahren nach einem oder mehreren der oben genannten Ansprüche, wobei eine plattenförmige Werkstückplatte mit tiefmatter Oberfläche und einem Glanzgrad von unter 3 Glanzpunkten bei 60 ° Reflexionswinkel gemäß DIN 2813 hergestellt wird.

27. Plattenförmige Werkstückplatte hergestellt durch das Verfahren nach einem der Ansprüche 1 bis 26.
